# EUROPEAN PATENT APPLICATION

(11) **EP 1 732 324 A2**
(43) Date of publication of application: **13.12.2006**
(21) Application number: 06076094.9
(22) Date of filing: 23.05.2006
(51) Int. Cl.: H04N 7/16

(54) **Dynamic content rating in a digital broadcast**

(30) Priority: 06.06.2005 US 145765
(71) Applicant: Delphi Technologies, Inc., Troy, Michigan 48007 (US)
(72) Inventor: Long, Jerral A., Kokomo, IN 46902 (US); Dockemeyer Jr., Joseph R., Kokomo, IN 46901 (US); Moeschberger, Donald G., Kokomo, IN 46901 (US)
(74) Representative: Denton, Michael John

(57) **Abstract**

A method (100) and apparatus (60) provide dynamic content rating for digital transmissions (20) of media programs. Rather than one rating or a set of ratings be associated with an entire program or broadcast channel, content rating data relates to specific segments (44,46,52) of a program. A user of a media receiving device (66) presets rating criteria (104) relating to a level or type of content to be blocked. The preset criteria are then used to selectively block (112) presentation of those segments of content of a media program that fall outside the acceptable rating criteria. A timed length or display area (52) segment of audio, video, text, graphics, or data may be dynamically blocked based on a comparison (110) of the content rating associated with the segment and the user's preset rating criteria.

## Description

### TECHNICAL FIELD

The present invention relates generally to digital transmissions, and more specifically to content rating for digital transmissions of media programs.

### BACKGROUND OF THE INVENTION

Technological advances have provided increased access to, reliance on, and diversity of content available in various forms of media for entertainment and educational use. For example, media programs received via radio or television (TV) broadcasts, and media content received via other digital transmission services, e.g. the internet and subscription based radio and TV. The changes in media content and access has heightened concern over the acceptability of content and access, especially in regard to age appropriate content for children. While the rating systems for the motion picture industry have been around for years, only recently have content ratings been applied to TV broadcasts and to other media transmissions.

One long-standing example of such a content rating system is the voluntary movie rating system established by and monitored by the Motion Picture Association of America (MPAA). The MPAA provides a content rating (G, PG, PG-13, R, NC-17) for movies based on theme, violence, language, nudity, sensuality, drug abuse, and other content elements of the media. More recently, the TV Parental Guidelines Monitoring Board established a similar voluntary system for TV broadcasts. TV parental guidelines provide content ratings (TVY, TVY7, TVG, TVPG, TV 14 and TVM) based on level of freight, violence, sexuality, and language.

To provide parents with some level of control over the media content viewed by their children, TV receivers are now available that have a "V-Chip" for blocking presentation of undesired programs. The V-Chip utilizes the content rating system of the MPAA or the US TV Parental Guidelines in order to block complete programs which exceed a preset acceptable content rating level that is selectable by the user. Specifically, the extended data services (XDS) packets within the vertical blanking interval (VBI) (first 21 scan lines of a video picture frame) in traditional broadcast TV formats, i.e. National Television System Committee (NTSC) may include a data packet providing a single content rating for the entire media program being broadcast.

Similarly, the newer ATSC (Advanced Television Systems Committee, www.ATSC.org) standard A/65B developed for hi-definition television (HDTV) provides transmission of a Content Advisory Descriptor data field defining a content rating for a given event. An event is defined by the standard as "the equivalent to the common industry usage of television program".

Blocking the presentation of unacceptable or offensive material may also be provided in the form of a multi-tiered subscription program. For example, specific channels that contain potentially unacceptable or offensive material are excluded from certain subscription packages, such as those marketed as family packages. Additionally, some TV receivers include password or PIN access that allow particular broadcast channels to be selected by the user and blocked from viewing.

Other known media rating standards include a system on rating internet content administered by the Internet Content Rating Association (ICRA), and the parental advisory labeling of explicit content for music recordings administered by the Recording Industry Association of America (RIAA).

### SUMMARY OF THE INVENTION

A method and apparatus provide dynamic content rating for digital transmissions of media programs. Rather than one rating or a set of ratings be associated with an entire program or broadcast channel, content rating data relates to specific segments of a program. A user of a media receiving device presets rating criteria relating to a level or type of content to be blocked. The preset criteria are then used to selectively block presentation of those segments of content of a media program that fall outside the acceptable rating criteria. A timed length or display area segment of audio, video, text, graphics, or data may be dynamically blocked based on a comparison of the content rating associated with the segment and the user's preset rating criteria.

Existing digital transmissions of media, including media broadcast services, often include data packets or a separate channel that provide informational data relating to aspects of the media content. For example, satellite radio (SDAR) includes program descriptive text (PDT) containing information such as song title, artist, album label, composer, and other data fields. SDAR receivers are often equipped to identify, display, or otherwise utilize the PDT. Advantageously, the present invention may be implemented utilizing the existing capability of digital broadcasts. Specifically, a PDT or other form of informational field may be designated as containing content rating information that is associated with a particular segment of a media program. By associating content ratings with particular segments of a media program, selective blocking of segments of a media program may be provided in order to eliminate objectionable or offensive material without blocking an entire program or an entire broadcast channel.

A program is defined as a complete scheduled media presentation, for example a half-hour, hour or several hour radio or TV show that is connected by a central theme or host, for example, a movie, a TV serial, a news entertainment show, a series of music videos or songs, an internet website, or other forms of media that can be digitally transmitted. A segment is a portion of a program and may be limited to any portion of a program, for example an individual song, music video, or webpage, or even a brief portion of a song, video, or webpage, such as single words, a phrase, a graphic, or a small number of video frames. Additionally, a segment may be limited to the audio, video, text, graphic or other media type portions, or a limited portion in time or presentation form, for example a particular portion of a video frame, or for audio, a particular track or channel. Thus the content rating is dynamic in that rather than labelling and blocking an entire broadcast channel or an entire program, the present invention provides labelling and blocking of individual segments of a media program. Advantageously, for some existing digital transmission standards, informational data which may include content rating is rebroadcast a few times a minute throughout a program; therefore, each content rating included within the informational data of a media program may be associated with the presentation content immediately following the rating and continuing until another rating is received.

In one exemplary embodiment a method of blocking presentation of content of segments of a digital transmission of a media program includes specifying preset content rating settings, receiving the digital transmission in the form of sequential segments, continually identifying content rating data associated with the segments of the transmission, comparing the identified content rating data with the preset content rating settings, and blocking presentation of segments of the media program based on the comparing step.

In another exemplary embodiment of the invention, a method of providing dynamic content rating for the presentation content of a digital transmission of a media program includes providing at least one content rating for each of a plurality of segments of the media program, providing informational data in the digital transmission, and including the content ratings with the informational data.

In yet another exemplary embodiment, an apparatus for receiving a digital transmission of a media program includes a receiver, a processor coupled to the receiver, memory coupled to the processor, and an output coupled to at least one of the receiver and the processor, the output providing presentation of the media program. The processor includes software enabling a user of the apparatus to specify preset content rating settings, receive the digital transmission, identify rating data in the transmission, the rating data associated with a segment of the program, compare the identified content rating with the preset content rating settings, and block output of segments of the media program content based on the comparison.

In another exemplary embodiment a media device for processing a digital transmission of a media program includes a processor, a data storage medium, a first data structure stored in the data storage medium, the first data structure including a first field containing data identifying a first data segment as containing at least a first content rating for a first content segment for the media program, and a second field containing data identifying a second data segment as containing data representing presentation content of the first segment of the media program; and a second data structure stored in the data storage medium, the second data structure including a third field containing data identifying a third data segment as containing at least a second content rating for a second content segment of the media program and a fourth field containing data identifying a fourth data segment as containing data representing the presentation content of the second content segment of the media program.

These and other aspects of the present invention will become more apparent from the following description of the illustrative embodiments.

### BRIEF DESCRIPTION OF THE DRAWINGS

The present invention will now be described, by way of example, with reference to the accompanied drawings, and which:
FIGURE 1 illustrates an exemplary data structure of a digital transmission, including dynamic content rating data according to the present invention;
FIGURE 2 illustrates an exemplary data structure illustrating content data segments associated with content rating data;
FIGURE 3 illustrates a video frame having an area of selectively blocked presentation content;
FIGURE 4 schematically illustrates a transmitting and receiving system for digital broadcast of a media program utilizing dynamic content rating according to the present invention;
FIGURE 5 illustrates the user interface of the receiving device of FIGURE 4; and
FIGURE 6 is a flowchart illustrating exemplary software associated with the system of FIGURES 4 and 5 for implementing identifying and blocking of selected program segments according to the present invention.

### DESCRIPTION OF THE PREFERRED EMBODIMENT

For the purpose of promoting an understanding of the principals of the invention, references will now be made to exemplary embodiments shown in the drawings and specific language will be used to describe the same. It will nevertheless be understood that no limitation of the scope of the invention is intended.

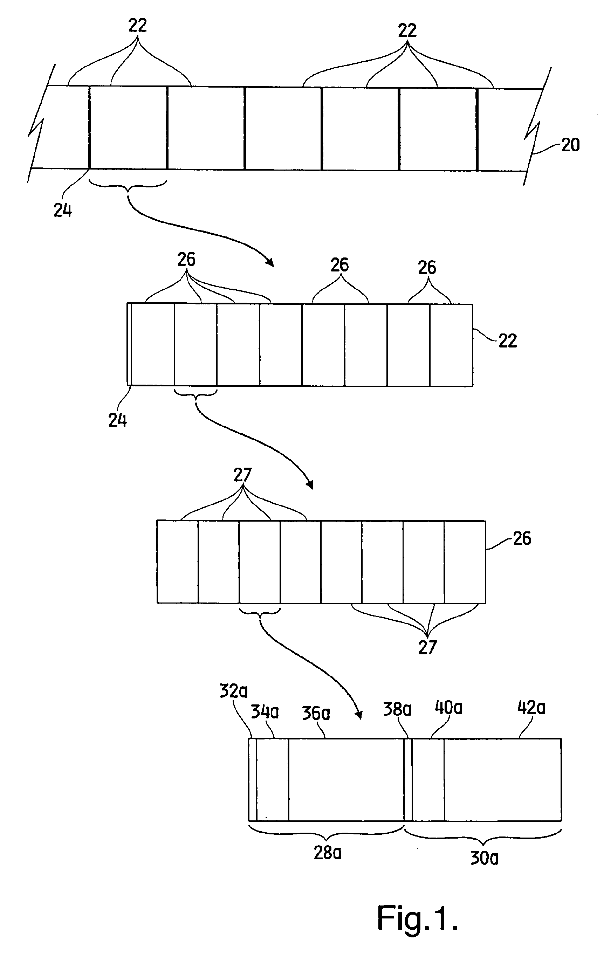

The present invention provides dynamic content rating for digital transmissions of media programs. An exemplary digital transmission 20 is shown in Figure 1. The digital transmission 20 may be used, for example, for a satellite radio or TV broadcast such as those receivable by an automotive multi-media receiver, or other mobile or fixed media receivers. The digital transmission 20 may comprise a series of data frames 22 that divide the data stream into identifiable blocks of data. For example, each of the data frames 22 may include a frame marker 24 that is identified by the receiver by a specific code or sequence of codes included in the frame marker 24. Each data frame 22 may be further sub-divided into smaller and smaller blocks of data. For example, each data frame 22 may be further divided into data channels 26. Each data channel 26 may represent, for example, a block of data associated with a specific radio station or TV/video channel.

Each of the data channels 26 may be further divided into data packets 27, for example, the first informational data packet 28a and the first content data packet 30a. Each data packet 27 may include a number of data fields. For example, the first informational data packet 28a includes a marker 32a, a header 34a, and informational data 36a. The marker 32a may include a code or data sequence that identifies the first informational data packet 28a as a data packet including informational data relating to the media program, for example, program title and program length. The header 34a may include data further describing the type of information included in the informational data 36a. For example, the header 34a may include field labels or parsing data to label and parse specific portions of the informational data 36a.

The first content data packet 30a may be structured similarly to packet 28a. Specifically, the marker 38a identifies the start of a block of data comprising presentation content for the media program, the header 40a may include fields, labels and/or parsing data for the content data block 42a. First informational data packet 28a may relate to the first content data packet 30a and subsequent content data packets, or the first informational data packet 28a may specify which content data packets, or portions thereof, the informational data is associated with. While packets 28a and 30a have been described as having markers 32a and 38a, headers 34a and 40a and data 36a and 42a, other data structures known in the art may be alternatively used.

According to the present invention, the first informational data packet 28a includes a code or sequence of data in the marker 32a or the header 34a that identifies at least a portion of the first information data block 36a as including content rating data. The content rating data may apply to all subsequent content data packets until another informational data packet including content rating information is received. Alternatively, the first informational data packet 28a may include data specifying which portion or portions of subsequent content data the rating information applies to.

The rating data may be in the form of an industry accepted standard, such as the MPAA or US TV parental guidelines discussed above, or any other standard or unique rating system. Rating data contained within the first informational data packet 28a may include a single content rating directed to all aspects of the presentation content for the particular segment of the media program, or may include different content ratings directed to various aspects of the content. Aspects may include, for example, education, entertainment, violence, language, dialogue, theme, nudity, sensuality, drug abuse, freight, discrimination and hate. Additionally, the content rating can apply to a particular portion of the media, for example media type, such as video, audio, text, graphics, and data; or alternatively, a particular segment of the media program. A segment may include, for example, a particular timed length of the content, an area of the video display frame, words, phrases, a particular song, dialogue, video segment or a portion of a web page. The media and segment types above are illustrative only and are not intended to form an inclusive list of all the possible types of aspects or segments of a media program which may be associated with a content rating according to the present invention.

In one exemplary form of digital transmission 20, the informational data packet 28a is on the order of 128 bytes in length. Even if as little as one byte of the packet is dedicated to content rating data, 256 different rating options could be utilized. Alternatively, a complete or more than one informational data packet 28a could be dedicated to content rating data.

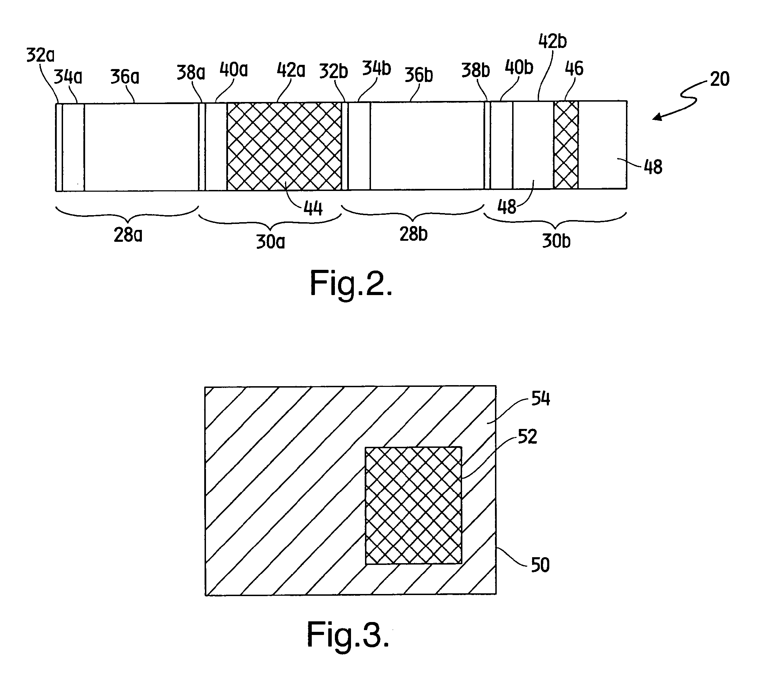

Figure 2 illustrates one exemplary way in which a content rating may be associated with a segment of a media program. Specifically, packets 28a, 28b, 30a, and 30b represent a portion of the digital transmission 20 of a media program. The second informational data packet 28b and the second content data packet 30b may be structured similarly to the first informational data packet 28a and the first content data packet 30a, respectively. The first information data packet 28a, including marker 32a, header 34a, and informational data block 36a, include content rating data associated with the content data segment 44 of the first content data packet 30a. As is illustrated in Figure 2, the content data segment 44 encompasses the entire content data block 42a of the first content data packet 30a.

The second informational data packet 28b, including marker 32b, header 34b, and informational data block 36b, also includes content rating data, in this case relating to the second content data packet 30b. More specifically, the first informational data packet 28b includes at least one rating that is associated with a segment 46 of the content data block 42b. Thus, in contrast to packets 28a and 30a, the content rating associated with segment 46 is not associated with the remaining data 48 of the content data block 42b. However, the second informational data block 28b may also include other content rating data associated with the remaining data 48. The segment 46 may relate to any of the above-discussed possible segments of a media program or any other selective portion of a media program, including a segment of content data spanning more than one data packet 27. For example, as shown in Figure 3, segment 46 of Figure 2 may relate to an area 52 of video frame(s) 50 of the presentation of the media program. Therefore, by associating a content rating with a particular segment 46 of a media program, a media receiver may selectively block the segment 46, for example the video area 52, while allowing the remaining data 48, for example the video area 54 outside of the video area 52, to be presented.

The content ratings may be intermittently located within content data, as shown in the exemplary data structure of Figure 2, or alternatively, content ratings associated with particular segments of the media program may be transmitted on a separate channel or may be transmitted prior to the entire content data of the media program.

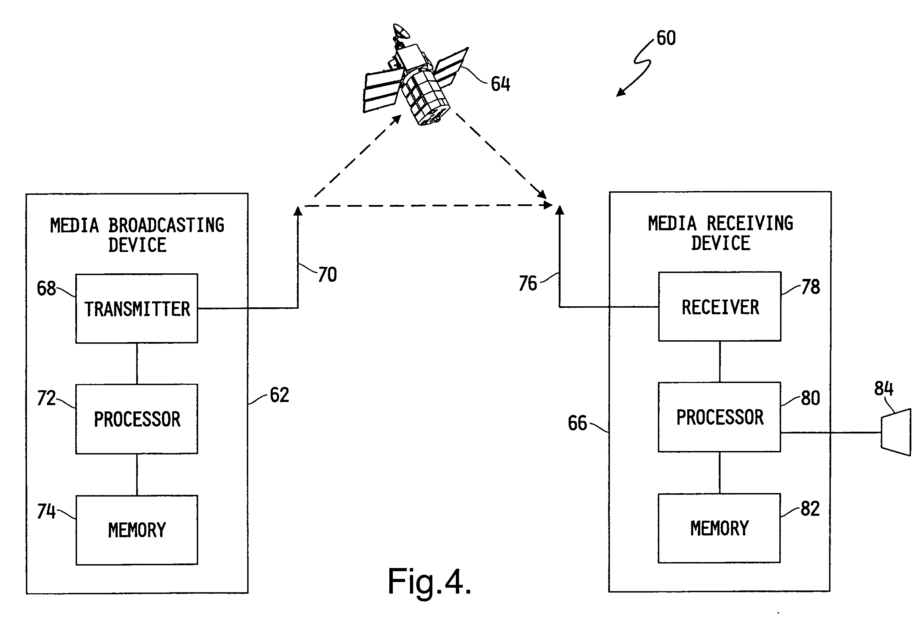

Referring to Figure 4, a system 60 is shown for providing and receiving the digital transmissions 20 having content ratings according to the present invention. The system 60 may include a media broadcasting device 62, a relay station 64, for example a satellite, and a media receiving device 66, for example a mobile media receiver such as those associated with vehicles. The exemplary media broadcasting device 62 includes a transmitter 68, a broadcast antenna 70, a processor 72, and a data storage medium 74, for example, digital memory. The media broadcasting device 62 is capable of processing a media program for transmission in a digital format including the content ratings according to the present invention, for example, the data structure of the digital transmission 20.

The media receiving device 66 includes a receiving antenna 76, a receiver 78, a processor 80, a data storage medium 82, for example, digital memory or a removable data storage device, and presentation output device 84. Presentation output device 84 may be, for example, one or more of an audio speaker, video display, and audio, video, data, or composite output port. The receiver 78 and/or the processor 80 are enabled, for example by software, to extract and utilize the content ratings included within the digital transmission 20 received by device 66. Specifically, the data storage medium 82 may include preset content rating criteria or settings, for example an acceptable rating range, acceptable rating threshold, unacceptable rating range, or unacceptable rating threshold, which may be used to identify and block segments of a received media program which have associated content ratings not meeting the preset criteria. The digital transmission 20 of the media program may be alternatively received from the data storage medium 82.

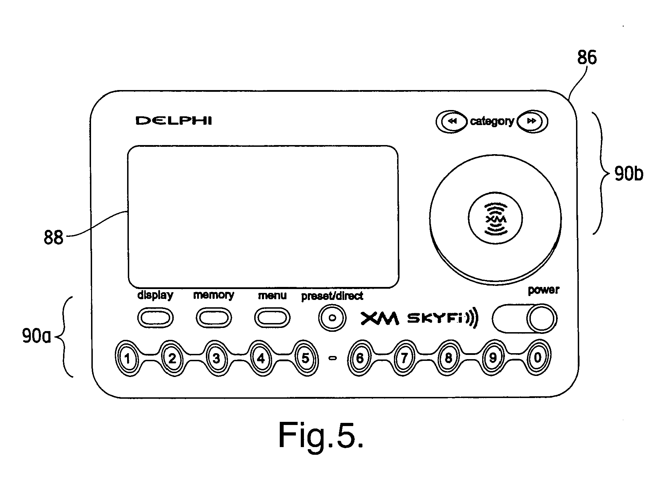

One exemplary media receiving device 66 is satellite radio (SDAR) receiver, of which the user interface 86 is shown in Figure 5. The user interface 86 of the receiving device 66 includes many features for selectively receiving and managing various digital radio broadcasts; however, such features will not be discussed herein as they are known in the art. The receiving device 66 also utilizes the content rating features according to the present invention. Specifically, device 66 is enabled, for example by software, to allow a user to select and store a preset content rating criteria. For example, the preset criteria may be selected and stored in the form of a maximum acceptable content rating threshold, an acceptable content rating range, an unacceptable rating threshold, or an unacceptable rating range. Multiple content ratings may also be stored, for example, for various users, for types of media programs, for example entertainment or educational, or for aspects of content, for example violence, language, dialogue and the like. Advantageously, the user interface 86, for example display screen 88 and soft keys and other control switches 90a and 90b, may be used for selecting and storing preset content rating criteria. The receiving device 86 may then selectively block segments of a media program based on a comparison of the preset criteria and the content rating that is received and associated with each segment of the media program received.

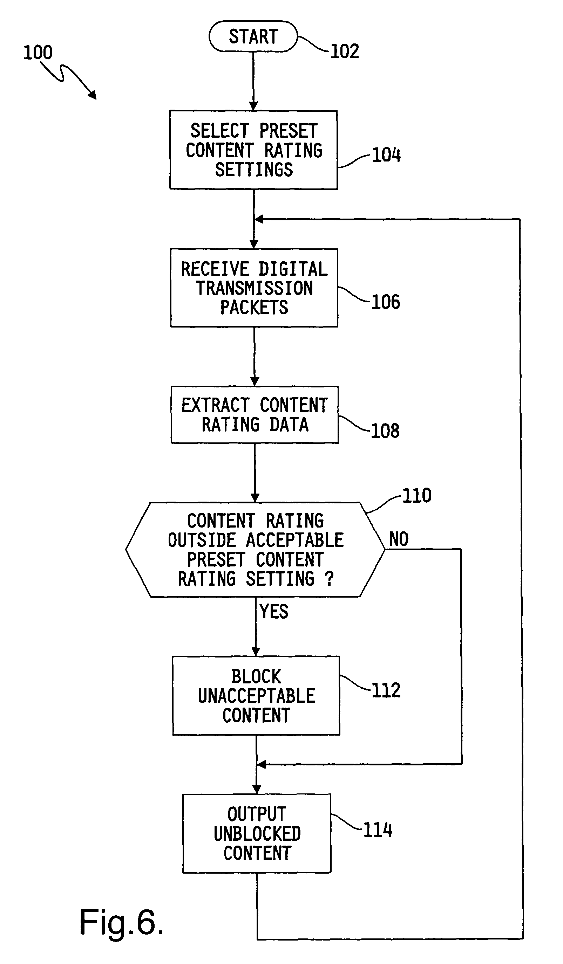

Referring to Figure 6, a flow chart 100 is shown illustrating one exemplary embodiment of a software algorithm for selectively blocking presentation of content segments of a digital transmission of a media program according to the present invention. The algorithm 100 may be used, for example, to enable receiving device 66 described above. The algorithm 100 begins at step 102, and at step 104, the processor 80 is operable to receive preset content rating criteria and store the preset criteria in the media storage medium 82. At step 106, the processor 80 is operable to receive and parse data packets 27, for example the first information data packets 28a and 28b and the first content data packets 30a and 30b of the digital transmission 20. At step 108, the processor 80 identifies and extracts content rating data associated with segments of the media program included within the digital transmission 20. Specifically, in step 108, the processor 80 identifies the informational marker 32a or 32b, identifies the informational header 34a or 34b relating to content rating, and extracts content rating data from the informational data block 36a or 36b.

Following step 108, the algorithm execution continues at step 110, where the processor 80 is operable to compare the extracted content rating data, associated with a segment of a received media program, to the preset content rating criteria. If the received content rating satisfies the preset criteria for blocking presentation of the segment of the media program, algorithm execution advances to step 112. However, if the received content rating that does not satisfy the preset content rating criteria to block presentation of the segment of the media program, execution advances to step 114. In step 112, the processor 80 is operable to block segment of the media program identified in step 110. In step 114, the processor 80 is operable to present or otherwise output the unblocked content segments of the media program. Following step 114, the algorithm execution returns to step 106 for receiving and processing additional data packets 27 of the digital transmission 20 relating to further segments of the media program.

While the invention has been illustrated and described in detail in the forgoing drawings and descriptions, the same is considered to be illustratively and not restrictive in character, it being understood that only exemplary embodiments thereof have been shown and described and that all changes and modifications that come with in the sprit of the invention are desired to be protected. Accordingly, the present disclosure should not be construed as restricted to automotive multi-media receivers, or to only wireless broadcast of media programs.

## Claims

1. A method (100) of blocking presentation of content of segments (44,46) of a digital transmission (20) of a media program, comprising:
specifying preset content rating settings (104);
receiving the digital transmission (106) in the form of sequential segments;
continually identifying content rating data associated with the segments of the transmission (108);
comparing the identified content rating data with the preset content rating settings (110); and
blocking presentation of segments of the media program based on the comparing step (112).

2. The method of claim 1, wherein the segment includes at least one of a timed length of content, media type, and an area (52) of a video display frame.

3. The method of claim 1, wherein the blocked segment includes at least one of video, audio, text, graphics, and data.

4. The method of claim 1, wherein the preset content rating settings relate to characterization of an aspect of the program content, including at least one of education, entertainment, violence, language, dialogue, theme, nudity, sensuality, drug abuse, fright, discrimination, and hate.

5. The method of claim 1, wherein the content rating data is intermittently interleaved in the digital transmission.

6. A method of providing dynamic content rating for the presentation content of a digital transmission (20) of a media program, comprising:
providing at least one content rating for each of a plurality of segments (42a,42b) of the media program;
providing informational data (36a,36b) in the digital data transmission; and
including the content ratings with the informational data.

7. The method of claim 6, wherein the plurality of segments includes at least one of a timed length of content, media type, and an area (52) of a video display frame.

8. The method of claim 6, wherein the plurality of segments includes at least one of the video, audio, text, graphics, and data.

9. The method of claim 6, wherein the content ratings relate to characterization of an aspect of the presentation content, including at least one of education, entertainment, violence, language, dialogue, theme, nudity, sensuality, drug abuse, fright, discrimination, and hate.

10. The method of claim 6, wherein the informational data is intermittently interleaved in the digital transmission.

11. An apparatus (66) for receiving a digital transmission (20) of a media program, including:
a receiver (78);
a processor (80) coupled to the receiver;
memory (82) coupled to the processor; and
an output (84) coupled to at least one of the receiver and processor, the output providing presentation of the media program;
the processor including software (100) enabling the apparatus to:
specify preset content rating settings (104);
receive the digital transmission (106);
identify content rating data in the transmission (108), the content rating data associated with a segment (44,46) of the program;
compare the identified content rating data with the preset content rating settings (110); and
block output of segments of the media program content based on the comparing step (112).

12. The method of claim 11, wherein the segment includes at least one of a timed length of content, media type, and an area (52) of a video display frame.

13. The method of claim 11, wherein the blocked segment includes at least one of video, audio, text, graphics, and data.

14. The method of claim 11, wherein the preset content rating settings relate to characterization of an aspect of the program content, including at least one of education, entertainment, violence, language, dialogue, theme, nudity, sensuality, drug abuse, fright, discrimination, and hate.

15. The method of claim 11, wherein the content rating data is intermittently interleaved in the digital transmission.

16. A media device (62,66) for processing a digital transmission of a media program, comprising:
a processor (72,80);
a data storage medium (74,82);
a first data structure (28a,30a) stored in the data storage medium, the first data structure including a first field (32a,34a) containing data identifying a first data segment (36a) as containing at least a first content rating for a first content segment of the media program, and a second field (38a,40a) containing data identifying a second data segment (42a) as containing data representing presentation content of the first content segment of the media program; and
a second data structure (28b,30b) stored in the data storage medium, the second data structure including a third field (32b,34b) containing data identifying a third data segment (36b) as containing at least a second content rating for a second content segment of the media program and a fourth field (38b,40b) containing data identifying a fourth data segment (42b) as containing data representing the presentation content of the second content segment of the media program.

17. The media device of claim 16, wherein the first and second content segments include at least one of a portion of time, media type, and an area (52) of a video display frame.

18. The media device of claim 16, wherein the first and second content segments include at least one of the video, audio, text, graphics, and data.

19. The media device of claim 16, wherein the first and second content ratings relate to characterization of an aspect of the first and second content segments, including at least one of education, entertainment, violence, language, dialogue, theme, nudity, sensuality, drug abuse, fright, discrimination, and hate.

20. The media device of claim 16, wherein the processor extracts the first and second data structure from the digital transmission.
